Europäisches Patentamt

European Patent Office

Office européen des brevets

(11) Publication number: 0 547 041 B1

# EUROPEAN PATENT SPECIFICATION

(45) Date of publication of patent specification: 27.09.95    (51) Int. Cl.⁶: **B60C 11/11**, B60C 11/04, B60C 9/20

(21) Application number: 93200585.3

(22) Date of filing: 29.11.89

(60) Publication number of the earlier application in accordance with Art.76 EPC: **0 371 788**

(54) **Pneumatic radial tyre.**

(30) Priority: 30.11.88 JP 302983/88
30.11.88 JP 302984/88
30.11.88 JP 302985/88
30.11.88 JP 302988/88
30.11.88 JP 302660/88

(43) Date of publication of application:
**16.06.93 Bulletin 93/24**

(45) Publication of the grant of the patent:
**27.09.95 Bulletin 95/39**

(84) Designated Contracting States:
**DE FR GB**

(56) References cited:
EP-A- 0 157 716     EP-A- 0 196 161
EP-A- 0 237 462     FR-A- 1 548 673
FR-A- 2 388 685     US-A- 4 730 654
US-A- 4 819 704

(73) Proprietor: **SUMITOMO RUBBER INDUSTRIES LIMITED**
**1-1 Tsutsuicho 1-chome**
**Chuo-ku**
**Kobe-shi**
**Hyogo-ken (JP)**

(72) Inventor: **Kajiwara, Shinzo**
**73-20 Obara**
**Tsuyama-shi,**
**Okayama-ken (JP)**
Inventor: **Konii, Yoshio**
**5-17, Kariguchidai 8-chome**
**Tarumi-ku,**
**Kobe-shi,**
**Hyogo-ken (JP)**
Inventor: **Yanase, Minao**
**8-1 Gakuen Nishimachi 5-chome**
**Nishi-ku,**
**Kobe-shi,**
**Hyogo-ken (JP)**

(74) Representative: **Stewart, Charles Geoffrey**
**SP TYRES UK LIMITED**
**Technical Division**
**Fort Dunlop,**
**Erdington,**
**Birmingham B24 9OT (GB)**

## Description

This invention relates to a pneumatic radial tyre, and more particularly to a pneumatic radial tyre of improved steerability for passenger cars.

Radial tyres are widely used to give good steering stability, ride comfort, wear rates and so on. However, tyres which are superior in a straightforward driving performance by preventing drifting to one side of a car in order to increase the driving safety of a car are now being demanded. Conventionally, one-side drifting is considered to be caused by the so-called conicity in which the circumferential lengths of the belt layer in the right and left sides of the tyre are different from each other. Therefore, various methods have been tried to improve the homogeneity in the right and left directions of the tyres axis.

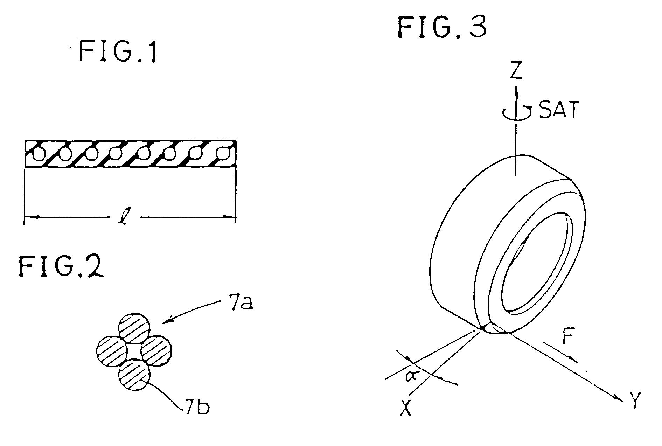

On the other hand, owing to the recent progress in tyre measurement techniques, as shown schematically in Fig.3, the cornering force, i.e. the lateral force F which is generated in the lateral direction Y of a tyre when a tiny slip angle ($\alpha$) is given in the running direction X of the tyre and the self-aligning torque SAT which revolves in the direction of the slip angle ($\alpha$) about the vertical axis Z that passes the centre of a tyre can be measured at a high precision.

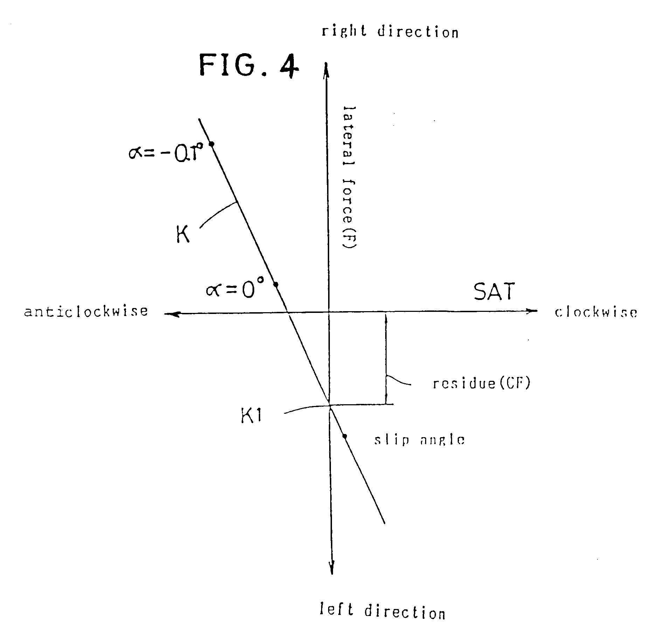

Such measurement results are shown by curve K in Fig.4, by plotting the self aligning torque SAT on the axis of abscissas and the lateral torque F on the axis of ordinates. In the curve K, the cases when the slip angle ($\alpha$) is 0 degrees, + 0.1 degrees or - 0.1 degrees are shown by dots.

From this relation of self-aligning torque SAT and lateral force F, the lateral force F at the crossing point K1 of the curve K and the axis of ordinates, that is, the lateral force F when the self-aligning torque SAT is not generated, can be derived and this is called the residue CF. It is the object of thus invention to provide a tyre which prevents one sided drifting of the car, improves straight line performance and has good aesthetic appeal.

The inventors have found that the residue CF is the tyre characteristic which affects the one-side drifting of the car. In other words, a car drifts to one side when the residue CF is in the plus direction, i.e. the right direction. Thus, the one side drifting characteristics of a car can be evaluated by the direction and the size of the residue CF. In order to prevent the one side drifting of a car, it is required to reduce the residue CF.

The residue CF is generated from the expansion and contraction of the belt in the ground contact zone. A shearing strain in a surface is created in the cross ply belt of a radial tyre by the parallel movement of the cords due to expansion and contraction. Thus the tread rubber generates a steering torque by a shearing in the surface generated together with the strain of the belt ply in the outermost layer of the belt. It is considered that the lateral force F is created by this steering torque. Thus it was found that the residue CF is caused by the belt and depends on the cords quantity of the belt and the inclination of the belt cords.

The cord quantity is defined as N x S which is the product of the total sectional area of one belt cord S ($mm^2$) and the number of the belt cords N existing in 10cm in the right angled direction of the belt cords. The rigidity of the belt can be reduced by reducing the cord quantity N x S or by enlarging the inclination angle of the cords to the direction of the tyres equator. This reduces the hoop effect of the belt and the residue CF, thereby controlling the one side drifting of a car.

On the other hand, such a reduction of the rigidity of the belt can improve the ride comfort performance at the same time, which is a basic item required for a car.

Additional experiments were conducted for reduction of the residue CF in a tread having a relatively low belt rigidity. As a result, it was found that good results could be obtained by reducing the inclination of the lateral grooves crossing the circumferential grooves of the tread pattern, that is, positioning the lateral grooves closely in the direction of the tyres axis. However, such a tread pattern does not provide a sufficiently powerful image to customers, lacks aesthetic sense, and tends to decrease the marketability of the product.

In another approach it was found that by reducing the belt cord quantity and enlarging the inclination angle to the direction of the tyres equator, the hoop effect is reduced and the cornering force decreases especially upon turning, thus impeding the steering stability.

It is hence a primary object of the invention to provide a pneumatic radial tyre which prevents one side drifting of a car in driving, improves a straight forward driving performance and reduces the deterioration of steering stability.

In order to obtain compatibility of the steering stability with the one side drifting performance of a car, the present inventors continued further studies based on a conventional pneumatic radial tyre for passenger cars having rows of blocks formed by crossing the lateral grooves in a rib sectioned by plural circumferential grooves having a linear or zigzag shape which extends in a circumferential direction. As a result of the studies, it was found that the contribution rating of lateral grooves to the cornering performance of a tyre is small, and therefore, they hardly affect the steering stability.

Moreover, it was also discovered that the residue CF is reduced by forming the outer lateral grooves in the right and left outside area SL,SR in the reverse direction to the outside belt cords which are the belt cords of the outermost belt ply and with an inclination of 0 to 40 degrees to the direction of the tyre axis.

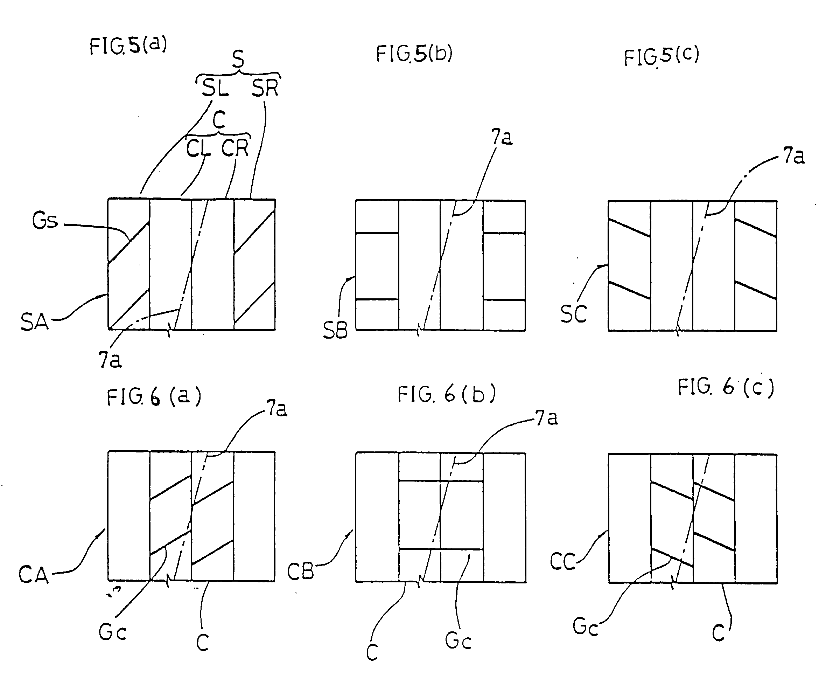

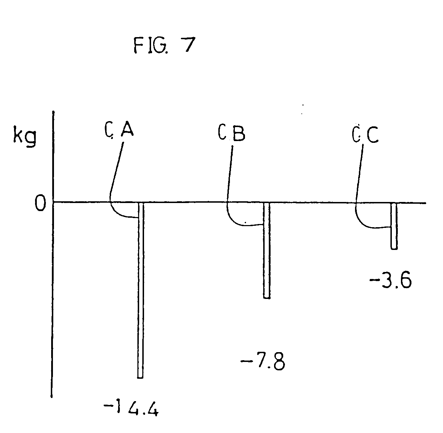

Prototypes of tyres SA, SB and SC having outer lateral grooves Gs in the outside area S in different directions were produced as shown in Figs 5(a) to (c). The outside belt cords 7a of the outermost belt ply are shown by single dotted broken lines in the Figures. In Fig.5 (a), the outer lateral; grooves Gs are inclined in the same direction as the outside belt cords 7a. In Fig.5(b), they are formed in the direction of the tyres axis. In Fig.5 (c), they are formed in the reverse direction. The results of measuring the residue CF in such patterns as SA, SB and SC are shown in Fig. 7. In the patterns SA, SB, and SC, the residue CF's are 14.4 kg, 7.8kg and 3.6 kg respectively. Thus, it was provided that the residue CF of the pattern SC in which the outer lateral grooves Gs are constructed in a different direction to the outside belt cords 7a is reduced.

Fig.7 shows the residue CF in the cases of patterns CA, CB and CC from Fig.6 in the case of pattern CA the inner lateral grooves Co are inclined in the same direction as the outside belt cords 7a in the inside area C, as shown in Fig. 6 (a). Figs 6(b) and (c) show the pattern CB in which they are inclined in the direction of the tyre axis and the pattern CC in which they are inclined in the reverse direction, respectively. The residue CFs are 5.9 kg 8.1 kg and 12.1 kg, respectively. The absolute value of the residue CF was thus reduced by inclining the inner lateral grooves in the same direction as the outside belt cords 7a.

Thus it was found that the residue CF can be reduced and the one side drifting performance of a car can be improved by inclining the lateral grooves in the reverse direction to the outside belt cords 7a in the outside area S and in the same direction in the inside area C.

Therefore, in the aspect of the invention, outer horizontal grooves Gs constructed in the outside area S are inclined in a different direction to the outside belt cords 7a and at 0 to 40 degrees to the direction of the tyres axis.

As described above by providing lateral grooves Gs in the outside area S extending in a different direction to the outside belt cords 7a, the residue CF can be reduced, and the larger the inclination angle Cs, is, the further the residue or can be reduced.

However, it was found that in the case that the inclination ($\theta$s) is set at a larger angle, the noise generated by the tread pattern becomes larger. Therefore, when noise characteristics is important, the inclination angle ($\theta$s) of the outer horizontal grooves Gs needs to be limited.

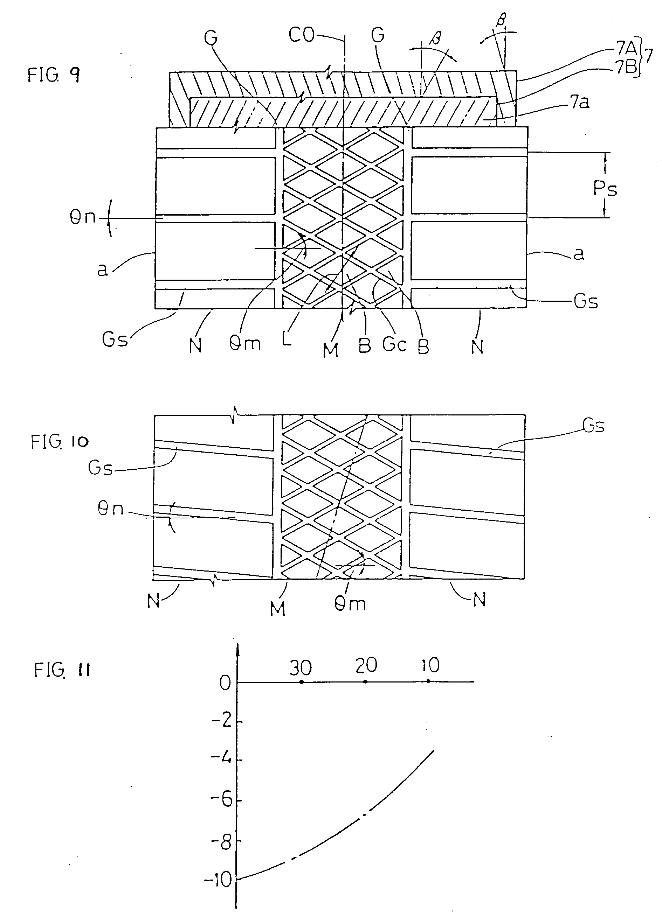

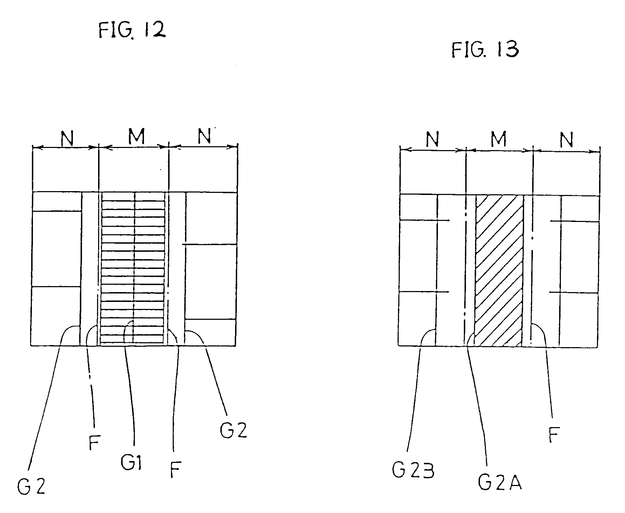

Therefore, the controlling method of the residue CF was further studied. The residue CF was measured by changing the maximum length L in the right angled direction to the lateral grooves Gc of a block B formed by the inner lateral grooves Gc formed in a middle area M, dividing the tread part shown in Fig 9 into three equal areas. As known from the results shown in Fig.11, it was found that the residue CF is reduced by reducing the maximum length L gradually. Furthermore, by setting the maximum length L at 10mm or less, the absolute value of the residue CF can be set at 5 kg or less.

Thus, the maximum length L of the block B in the middle area M was set at 10 mm or less.

By this the straight forward driving stability can be improved without affecting the steering stability or noise characteristics.

Moreover, the invention can be preferably adopted in a tyre having a belt which brings about a strong hoop effect and improves the steering stability, wherein the cord quantity NS is 18.0 or more and the inclination of the belt cords to the tyres equator is 18 degrees or less.

Embodiments of the invention will be described in detail below, in conjunction with the attached drawings in which:-

Fig.1 is a sectional view of a belt ply;

Fig.2 is a sectional view showing an example of a belt cord;

Fig.3 is a perspective view explaining the residue CR;

Fig.4 is its diagram;

Figs. 5(a) to (c) and 6(a) to (c) are plan view showing patterns used in the experiments; Fig.7 is a diagram showing the experimental results;

Fig.8 is a sectional view showing one of the embodiments of the invention;

Fig.9 is a plan view showing the pattern of Fig.8;

Fig.10 is a plan view showing an example of another pattern;

Fig.11 is a diagram showing an example of the test; and

Figs 12 and 13 are plan views showing other patterns.

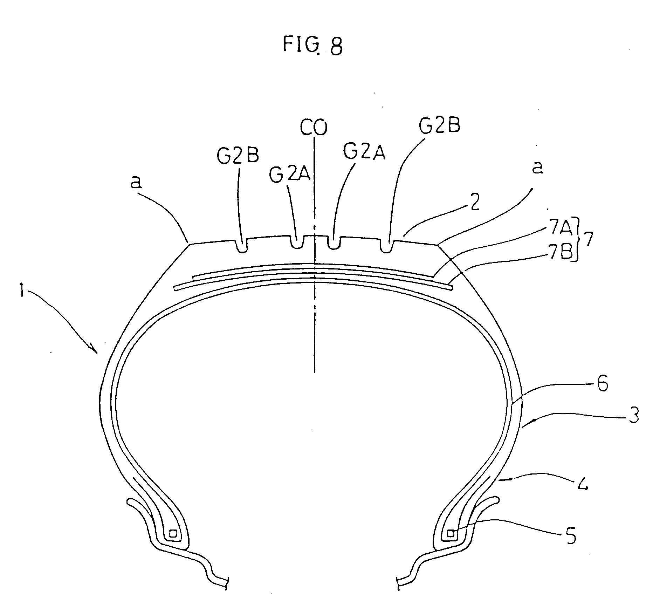

In Figs 8 and 9, a pneumatic radial tyre 1 of the invention comprises a carcass 6 extending from a tread part 2 through a side-wall part 3 to a bead part 4 and wrapped around a bead core 5 in each bead a belt 7 is placed radially outside the carcass 6 and inside the tread part 2.

The belt 7 comprises belt plies 7A and 7B of two inside and outside layers which are inclined in mutually reverse directions. The outermost belt ply cords of the outside belt ply 7A in the embodiment are inclined in the right upper direction to the tyres equator CO as shown in Fig.9. For belt cords 7a, as shown for example in Fig.2 twisted steel filaments 7b in 2 + 7 x 0.22, 1 x 5 x 0.23 or 1 x 4 x 0.22 relationship may be used.

The tread part 2 is divided virtually into a middle area M including the tyre equator CO and outward areas N extending to the edges of the tread part. In the outward areas N, outer grooves Gs are placed at spacings in the direction of the tyres equator (CO) extending towards the direction of the tyres axis with an inclination angle (Θn) of 0 degrees. In the middle area M, inner grooves Gc with an inclination angle (Θm) of 45 degrees or less to the direction of the tyres axis are formed.

The inner grooves Gc are small grooves of 0.5 to 3mm in width, and the inner grooves Gc provide crossing grooves mutually inclined in two different directions, each at approximately 40 degrees, to either side of the direction of the tyres axis. Therefore, in the middle area M, multiple rhombic blocks B are formed in an oblique latticed shape. The maximum length L of tyre blocks B in a right angled direction to the groove Gs is set at 10 mm or less. In addition grooves G extend continuously in the direction of the tyres equator is positioned to section the middle area M and the outward areas N into approximately three equal areas. The grooves G may be linear straight grooves or zigzag grooves. The circumferential pitch Ps which is the distance between successive outer lateral grooves Gs in the direction of the tyres equator (CO) is set at 40 mm or less, preferably at 20 mm or less.

By setting the length of the blocks B in the middle area M in a right angled direction to the inner horizontal grooves Gc at 10 mm or less, even when the outer grooves Gs extending in the direction of the tyres axis in the outward area N are constructed to control pattern noises, the residue CF is reduced as mentioned before.

However, the outer grooves Gs are not so limited, and, as shown in Fig. 10, they may be inclined in the direction of the tyre axis at an angle (Θn) of such a range that does not increase pattern noise, for example, 15 degrees or less, preferably 10 degrees or less, and more preferably 5 degrees or less.

Figs 9, and 10 show a case where the circumferential grooves G are respectively constructed in the parts that section the middle area M and the outward area N, while three such grooves G1, G2, and G2 may be employed, as shown in Fig 12, or four grooves G2A and G2B may be employed spaced at a regular intervals as shown in Fig.13. In these cases, the middle area M and the outward areas N are sectioned by virtual lines F on the ribs. Inner lateral grooves Gc may be formed not in a latticed shape but also as grooves parallel with the direction of the tyres axis or inclined and not mutually crossing, as shown in Figs 12 and 13.

As a working example a prototype tyre having a size of 175/70R13 was produced and the ride comfort and the residue CF were measured. For the belt cords, steel cords of 1 x 4 x 0.22 were used. the belt was formed in two plies. The test was performed by mounting the tyre on a rim 5J x 13 setting the internal pressure at 2.0 kg/cm$^2$, the load at 300 kg and using a flat track tyre test machine supplied by MTS company, USA to measure the residue CF. The residue CF is shown by a residue CF index setting the index of the comparison example at 100 in Table 1 etc. The smaller the residue of Index is, the more preferable the result is. In regard to the ride comfort, by mounting the tyre on a 2,000 cc passenger car, a feel test was conducted by a driver, and an evaluation was made by setting the comparison examples at 100 points. Higher scores show better ride comfort.

In regard to the invention, a tyre as shown in Table 1 and Fig 9 was produced. The results are shown in the Table 1. The noise characteristic was also evaluated through a feel test by a driver and shown in degrees of noise. Higher scores mean more inferiority in noise characteristics.

Thus, the invention can improve the one-side drifting of a car without sacrificing steering stability.

T a b l e  1

| | Em. 5-1 | Em. 5-2 | Em. 5-3 | Co. 5-1 | Co. 5-2 | Co. 5-3 | Co. 5-4 |
|---|---|---|---|---|---|---|---|
| Pattern | Fig. 9 | Fig. 9 | Fig. 10 | Fig. 9 | Fig. 9 | Fig. 9 | Fig. 5 (c) |
| Belt cord | | | | | | | |
|  Material | Steel | Steel | Steel | Steel | Steel | Steel | Steel |
|  Number of plies | 2 | 2 | 2 | 2 | 2 | 2 | 2 |
|  Cord N×S | 1 × 4 × 0.22 2 0.5 | 1 × 4 × 0.22 2 0.5 | 1 × 4 × 0.22 2 0.5 | 1 × 4 × 0.22 2 0.5 | 1 × 4 × 0.22 2 0.5 | 1 × 4 × 0.22 2 0.5 | 1 × 4 × 0.22 2 0.5 |
|  Direction of outside belt cord | Right upper | Right upper | Right upper | Right upper | Right upper | Right upper | Right upper |
| Middle lateral groove | | | | | | | |
|  Inclination angle ($\theta_m$) | 30 | 30 | 30 | 30 | 30 | 30 | — |
|  Direction | Crossed | Crossed | Crossed | Crossed | Crossed | Crossed | |
|  Maximum length L (mm) | 5 | 10 | 10 | 15 | 20 | 30 | |
| Outer lateral groove | | | | | | | |
|  Inclination angle ($\theta_n$) | Lateral | Lateral | 8 | Lateral | Lateral | Lateral | 3 5 ($\theta_s$) |
|  Direction | — | — | Right lower | — | — | — | Right lower |
|  Circumferential pitch Ps (mm) | 1 8 | 1 8 | 1 8 | 1 8 | 1 8 | 1 0 | 1 8 |
| Steering stability | 1 0 5 | 1 0 5 | 1 0 5 | 1 0 0 | 9 5 | 9 5 | 1 0 5 |
| Residue CF index | 7 0 | 8 0 | 8 0 | 1 0 0 | 1 3 5 | 1 7 0 | 7 0 |
| Noise characteristic | 9 0 | 9 5 | 1 0 5 | 1 0 0 | 1 0 5 | 1 1 0 | 1 1 5 |

Em. : Embodiment
CO. : Comparative example

**Claims**

1. A belted radial tyre comprising a pair of bead cores (5) each disposed in each bead part (4), a carcass (6) turned up around the bead cores, a belt (7) disposed radially outside the carcass and inside a tread part (2), and at least two circumferential grooves in said tread part, wherein the tread part (2) is provided with two circumferential lines of demarcation (G) to define three equal-width axial sections (N,M,N), said tread part characterised by the central section (M) being provided with parallel lateral straight grooves defining blocks, the length (L) of each said block measured in a right angled direction to the lateral straight grooves being not more than 10mm.

2. A tyre according to claim 1 characterised in that said tread part is provided in the two outer sections (N and N) with lateral straight grooves (Gs) extending substantially parallel with the tyre axial direction.

3. A tyre according to claim 1 or 2 characterised in that said blocks in the central section (M) are rhombic blocks.

4. A tyre according to claim 1, 2 or 3 characterised in that the width of said lateral straight grooves in the central section (M) are 0.5 to 3.0mm.

5. A tyre according to any one of the preceding claims characterised in that said belt comprises a ply of parallel steel cords laid at not more than 18 degrees to the tyre equator, and each said ply has a cord quantity of more than 18, the cord quantity defined as the total of the cross sectional areas ($mm^2$) of the steel cords (7a) per 10cm ply width in a right angled direction to the steel cords.

**Patentansprüche**

1. Ein Gürtelradialreifen mit einem Paar Wulstkerne (5), von denen jeder in jedem Wulstteil (4) angeordnet ist, einer Karkasse (6), welche um die Wulstkerne herumgeschlagen ist, einem Gürtel (7), welcher radial außerhalb der Karkasse und innerhalb eines Laufflächenteiles (2) angeordnet ist, und wenigstens zwei Umfangsnuten im Laufflächenteil, worin der Laufflächenteil (2) mit zwei Umfangsbegrenzungslinien (G) versehen ist, um drei gleich breite axiale Abschnitte (N, M, N) festzulegen, der Laufflächenteil dadurch gekennzeichnet ist, daß der Mittelabschnitt (M) mit parallelen, lateralen, geraden Nuten versehen ist, welche Blöcke festlegen, wobei die Länge (L) jedes Blocks, gemessen in einer rechtwinkligen Richtung zu den lateralen geraden Nuten, nicht mehr als 10 mm beträgt.

2. Ein Reifen nach Anspruch 1,
dadurch gekennzeichnet,
daß der Laufflächenteil in den zwei äußeren Abschnitten (N und N) mit lateralen geraden Nuten (Gs) versehen ist, welche sich im wesentlichen parallel zur Axialrichtung des Reifens erstrecken.

3. Ein Reifen nach Anspruch 1 oder 2,
dadurch gekennzeichnet,
daß die Blöcke im Mittelabschnitt (M) rhombische Blöcke sind.

4. Ein Reifen nach Anspruch 1, 2 oder 3,
dadurch gekennzeichnet,
daß die Breite der lateralen geraden Nuten im Mittelabschnitt (M) 0,5 bis 3,0 mm beträgt.

5. Ein Reifen nach einem der vorhergehenden Ansprüche,
dadurch gekennzeichnet,
daß der Gürtel eine Lage paralleler Stahlkorde umfaßt, welche unter nicht mehr als 18 Grad zum Reifenäquator gelegt sind, und jede Lage mehr Kordmenge als 18 aufweist, wobei die Kordmenge als die Summe der Querschnittsbereiche ($mm^2$) der Stahlkorde (7a) pro 10 cm Lagenbreite in einer rechtwinkligen Richtung zu den Stahlkorden definiert ist.

**Revendications**

1. Pneumatique à carcasse radiale et à ceinture, comprenant deux tringles (5) disposées chacune dans une partie de talon (4), une carcasse (6) repliée autour des tringles, une ceinture (7) placée radialement à l'extérieur de la carcasse et à l'intérieur d'une partie (2) de bande de roulement, et au moins deux gorges circonférentielles formées dans la partie de bande de roulement, dans lequel la partie de bande de roulement (2) comprend deux lignes circonférentielles de démarcation (G) destinées à délimiter trois tronçons axiaux (N, M, N) de même largeur, la partie de bande de roulement étant caractérisée en ce que le tronçon central (M) a des gorges rectilignes latérales parallèles délimitant des blocs, la longueur (L) de chaque bloc, mesurée en direction perpendiculaire aux gorges rectilignes latérales, ne dépassant pas 10 mm.

2. Pneumatique selon la revendication 1, caractérisé en ce que la partie de bande de roulement comprend, dans les deux tronçons externes (N et N) des gorges rectilignes latérales (Gs) qui sont pratiquement parallèles à la direction axiale du pneumatique.

3. Pneumatique selon la revendication 1 ou 2, caractérisé en ce que les blocs du tronçon central (M) sont des blocs en losange.

4. Pneumatique selon la revendication 1, 2 ou 3, caractérisé en ce que la largeur des gorges rectilignes latérales dans le tronçon central (M) est comprise entre 0,5 et 3,0 mm.

5. Pneumatique selon l'une quelconque des revendications précédentes, caractérisé en ce que la ceinture comprend une nappe de câblés parallèles d'acier faisant un angle qui ne dépasse pas 18° avec l'équateur du pneumatique, et chaque nappe a une quantité de câblés qui dépasse 18, la quantité de câblés étant la somme des sections (mm$^2$) des câblés d'acier (7a) sur une largeur de nappe de 10 cm en direction perpendiculaire aux câblés d'acier.

FIG.1

FIG.2

FIG.3

FIG. 4

FIG.5(a)

FIG.5(b)

FIG.5(c)

FIG. 6 (a)

FIG. 6 (b)

FIG. 6 (c)

EP 0 547 041 B1

FIG. 7

FIG. 8

FIG. 9

FIG. 10

FIG. 11

FIG. 12

FIG. 13

FIG. 12: N M N — F G2 G1 F G2

FIG. 13: N M N — G23 G2A F